# EUROPEAN PATENT SPECIFICATION

(11) **EP 2 271 900 B1**
(45) Date of publication and mention of the grant of the patent: **20.12.2017**
(21) Application number: 09712354.1
(22) Date of filing: 16.02.2009
(51) Int. Cl.: G01G 19/18, G01G 21/28

(54) **HANGING SCALE**
HÄNGEWAAGE
BALANCE EN SUSPENSION

(30) Priority: 21.02.2008 GB 0803205
(43) Date of publication of application: 12.01.2011
(73) Proprietor: Illinois Tool Works Inc., Glenview, IL 60025 (US)
(72) Inventor: TAYLOR, Ian, Kenilworth Warwickshire CV8 2JG (GB)
(74) Representative: Phillips & Leigh LLP
(86) International application number: PCT/US2009/034196
(87) International publication number: WO 2009/105399

(56) References cited:
- CH-A5- 687 480
- DE-A1- 3 904 084
- DE-U1- 20 018 257
- GB-A- 2 408 810
- JP-A- 2007 333 606
- JP-U- 53 148 664
- US-A- 4 936 399
- US-A1- 2004 238 230

## Description

### Field of Invention

The present invention relates to a weighing scale, more particularly to a hanging scale.

### Introduction

Weighing scales for use in commerce such as in supermarkets generally comprise a load cell and a number of auxiliary electronic components in signal communication with the load cell. These are housed in a casing which is sealed to prevent unauthorised tampering with the internal components. The auxiliary components may include microprocessors, analogue-to-digital converters, electronic memories, interfaces for external data processing systems and computers, peripheral units such as a printer, and human interfaces such as in input keyboard and a display unit for displaying the weight, prices, etc. Typically the load cell is a metal body that deforms under the application of a load, and an electronic strain gauge that measures the deformation. Common types of strain gauges include Wheatstone bridge resistance type transducers or piezoelectric crystals.

Counter top weighing scales are not suitable for use in wet and/or corrosive environments such as a fish counter, where brine is often present and where work surfaces are more-or-less permanently wet and/or subjected to frequent washing for hygiene or other purposes. To keep the scale out of harm's way and to reduce its exposure to moisture and corrosive chemicals in such environments, the hanging scale has been developed. This is suspended from an overhead support, typically from the lower end of a vertical mounting pole attached to a ceiling. The weigh pan is then suspended below the hanging scale.

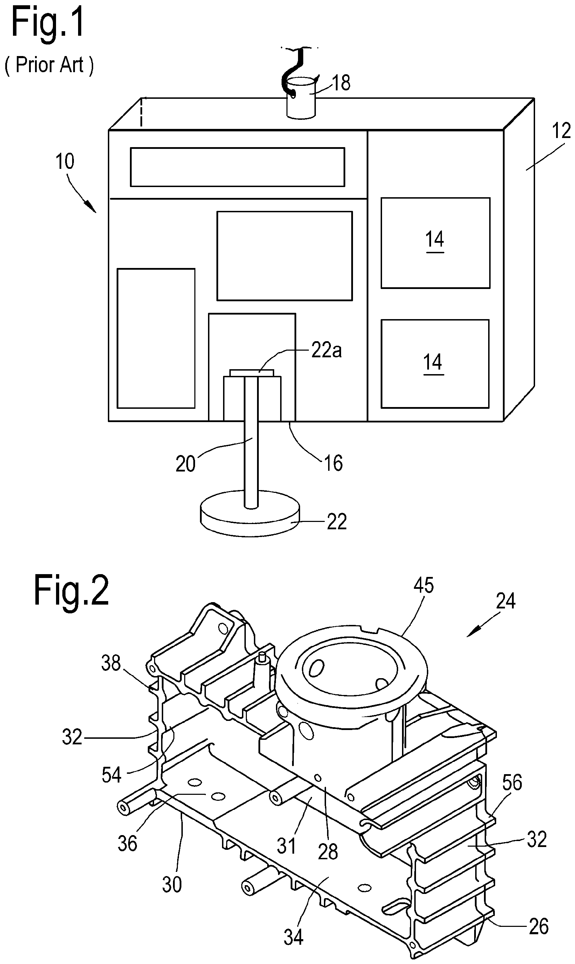

To carry the weigh pan (see Fig. 1), a support such as a hanging rod is mounted to the live end of a load cell which has its other (dead) end mounted to the base of an outer loadbearing chassis, frame or casing (hereafter "loadbearing casing") of the scale. The load cell is therefore contained within the loadbearing casing and the weigh pan support protrudes downwardly from the loadbearing casing. Thus weight loads applied to the hanging rod are imparted to the load cell causing the load cell to deform in proportion to the weight of the load. The uppermost part of the loadbearing casing is attached to the overhead support. In the supermarket environment, the hanging scale and its overhead support need to be sufficiently strong to cope with any loads or overloads applied in service, e.g. in the event of accidental overloading of the weighing scale or of people deliberately pulling down or swinging on the scale or the weighpan. As a result, the loadbearing casing housing the load cell and auxiliary components is usually "over engineered", to cope with such overloads, as well as to provide the necessary stiffness and stability needed for accurate weight measurement.

US4936399 (Christman Richard et al) relates to a hand held weighing scale operating on a capacitance measuring concept and in which the exterior housing of the scale provides the circuitry and battery housing portion, a handle portion for suspending the scale in use and an extending hook portion for suspending goods to be weighed.

GB2408810 (Fox) relates to a weighing scale comprising a metal housing encased in a plastic moulded case made as two halves which are snap fitted together. The load cell is shown in the drawings to be secured beneath the bottom of the metal housing by means of bolts or screws. A suspension hook for suspending loads to be weighed secured to one end of the load cell.

A problem associated with such hanging scales is that the fabrication of the loadbearing casing for supporting the load cell and associated auxiliary components tends to result in a bulky product which is costly and complex to manufacture, needing a number of internal fabricated structural elements, and also limits the freedom to make any significant design changes, especially to the exterior shape and appearance of the loadbearing casing.

### Summary of Invention

The present invention provides a mount for a weighing scale according to the independent claim. Optionally, the mount further comprises means for supporting further auxiliary components externally of the mount. The mounting point and suspension point may of course be formed in the necessary size, shape and volume for co-operation with the load cell and the overhead support, respectively.

Providing a separate mount for the load cell that is suspended from an overhead support and which is sufficiently substantial to support the weighing load in use as well as externally supporting the outer casing and other auxiliary components, removes the need to fabricate an over-sized and over engineered loadbearing casing to house the internal components of the weighing scale. This provides a number of advantages. Firstly, the mount can be made more robust than existing loadbearing casings on the market since better fabrication techniques can be concentrated on the essential component for supporting the load cell, which are not possible in existing systems due to cost and materials used. For example, the use of high strength materials and fabrication techniques such as casting are now more accessible without significantly affecting the cost. As a result, a weighing scale incorporating the mount of the present invention is more robust and resilient to knocks and vibrations experienced in a typical commercial environment. Secondly, the increased support provided by the mount, removes the need for any internal structures and compartments in the scale and the auxiliary components can simply be screwed or otherwise secured to the mount without jeopardising any of the structural characteristics of the mount. This increases design freedom in relation to the outer casing or panels since these are now largely non-loadbearing and are not restricted by any internal fabricated structures or compartments. As the mount incorporating the load cell occupies less space, the auxiliary components can also be compactly assembled around the mount making the whole assembly less bulky than prior hanging scales. Thirdly, the reduction in the need of fasteners/fixings for mounting the auxiliary components and for fabricating the outer casing, greatly facilitates ease of assembly of the weighing balance, further reducing the manufacturing and process costs. The mount may be provided with a number of mounting points for mounting the auxiliary components. One can envisage the mount of the present invention acting like a 'hanger' for supporting the load cell and the other auxiliary components, including a largely non-loadbearing casing.

The reduction of the number of components necessary in the construction of the weighing balance also means that the weighing balance can be made much lighter than the known existing bulky weighing balances. Optionally, the mount can be a metallic casting. Typical materials that can be used for the mount that provide substantial structural integrity, rigidity and strength without increased weight are light metals such as aluminium, titanium and alloys comprising such metals or the like.

Preferably the structural integrity of the mount can be further enhanced by forming the walls of the mount with integral stiffening or strengthening elements, e.g. in the form of ribs. The use of ribs can provide a relatively stiff yet lightweight structure, economical on material, and which can also act as a heat sink for preventing internal electronic components from over heating.

Optionally, the mount houses the load cell and supports a weighpan suspension member. Preferably the weighpan suspension member is supported on the load cell by means of a load bearing member mounted on the load cell such that in use a downward force on the weighpan suspension member applies a load to the load cell.

To enable the mount to be suitably attached to the overhead support, the hanging point preferably comprises a neck portion e.g. for receiving a pole of a hanging kit. Optionally, a pin can be inserted through the neck portion for detachably securing the mount to the hanging kit. The neck portion can be fabricated to any design so as to accept any bespoke hanging kit. In another aspect of the present invention, the neck portion has a head comprising a gutter for capturing fluids. Any fluids (e.g. condensation or water leakage) travelling down the hanging kit is captured in the gutter so limiting the risk of the water reaching the internal components of the weighing scale. Preferably, the gutter has an outer wall with a break region for safely releasing the fluids. More preferably, the break is located such that the fluids are released towards the back of the mount in normal use.

The present invention further provides a weighing scale comprising a load cell and a mount as described above. More particularly, the weighing scale further comprises a weighpan suspension member supported by the load cell. Preferably, the weighpan suspension member is electrically insulated from the load cell. This prevents any induced currents from interfering with the electronics associated with the load cell.

In one aspect of the present invention, the weighpan suspension member is mounted to the load cell by means of a cantilevered mounting so that any load applied to the weighpan suspension member is applied to the load cell. Optionally, the cantilevered mounting is integrally formed with the load cell. In another aspect, the weighpan suspension member is threadingly engageable to the load cell, or attached to it via a through hole and suspension nut.

Preferably, the mount suspension point and the weighpan suspension member are aligned along a load axis. This is to limit any adverse horizontal component of force or moment being applied to the mount and/or weighpan suspension member when weight loads are applied to the load cell. More preferably, the mount suspension point, the weighpan suspension member and the load cell (especially the live end of the load cell) are aligned along a load axis.

To prevent any excessive transverse forces applied to the weighpan suspension member from being transferred to the load cell and the mounting of the weighpan suspension member on the load cell, and consequently damaging these parts and/or affecting the accuracy of the weight reading, an adjustable centraliser having a clearance hole for receiving the weighpan suspension member is provided. The centraliser is adjustable so that the centre of the hole is concentric with the load axis. The centraliser clearance hole provides a reaction surface to limit movement of the hanging rod in the horizontal direction.

Further features and aspects of the present invention will be apparent from the claims and the following illustrative description made with reference to the accompanying drawings :-

### Brief Description of the Drawings

Fig. 1 is a perspective view of a hanging scale known in the art showing a casing or chassis, internal auxiliary components and load cell.
Fig. 2 is a front view of a mount according to an embodiment of the present invention.
Fig. 3 is a rear view of the mount of Fig. 2.
Fig. 4 is a perspective view of the load cell secured to the mount at its dead end.
Fig. 5 is a perspective view of the mount showing the mechanism by which its neck portion is supported from the hanging kit.
Fig. 6 is a perspective view of reaction points for the upload and download protection of the load cell.
Fig. 7 is an exploded schematic view of the auxiliary components and load cell being attached to the mount of the present invention, and

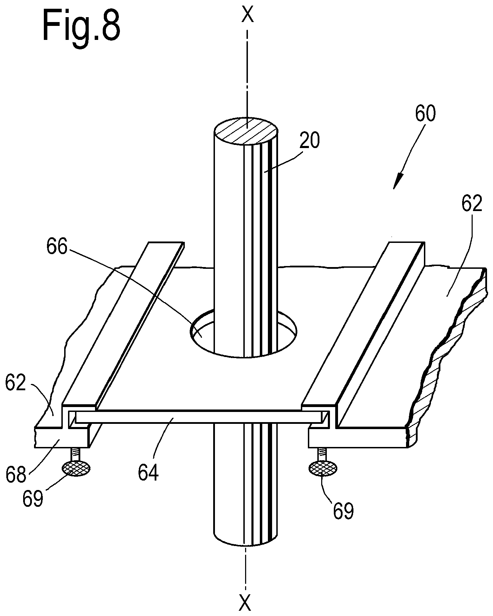

Fig. 8 is a perspective view of the centraliser for maintaining the concentricity of the weighpan suspension member.

### Description of the Illustrated Embodiment

Figure 1 is a schematic drawing of a typical known weighing scale 10. The weighing scale comprises a loadbearing casing for housing the components 14 associated with the load cell 16. The casing 12 is usually compartmentalised for supporting the separate auxiliary and peripheral components 14. The top of the loadbearing casing 12 is mounted to a suitable overhead support 18 for bearing the weight of any loads including overloads applied to the weighpan 22 and load cell 16. The load cell 16 for determining the weight applied to the weighpan is mounted to a bottom wall of the loadbearing casing 12. Load is applied to the load cell by means of a weighpan suspension member in the form of a hanging rod 20 having a suitable load bearing plate 22a mounted over an area of the load cell 16. The weigh pan 22 is connected to the lower end of the hanging rod 20. In use, the goods to be weighed are placed in the weigh pan 22 which causes the hanging rod to impart a load to the load cell via the load bearing plate, in proportion to the weight of the goods. By measuring the deformation of the load cell 16, the weight is then determined. The loadbearing casing must therefore be strong enough and stiff enough to transmit loads applied to the weighpan, via the load cell and bottom wall, to the top of the loadbearing casing and the overhead support.

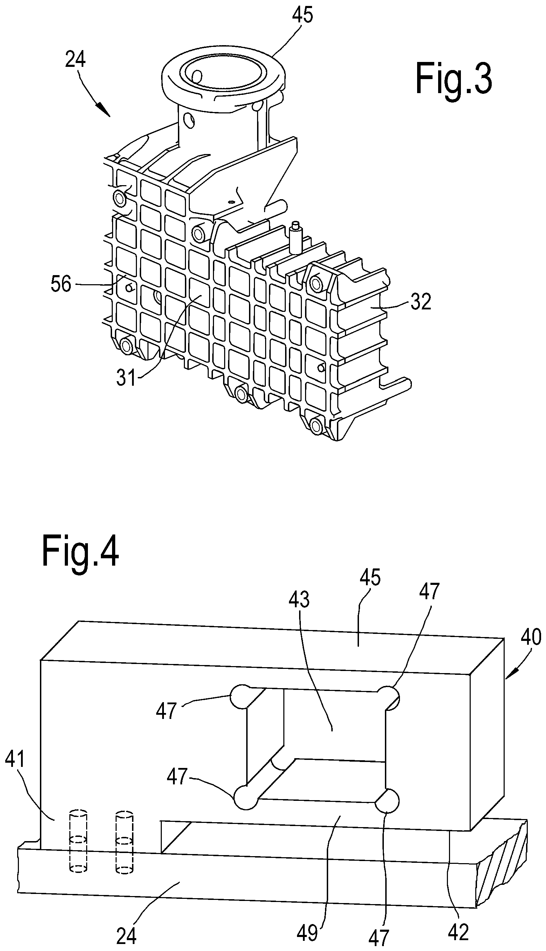

Referring to Figure 2, the mount 24 according to an embodiment of the present invention comprises a body portion 26 having a top wall 28, a bottom wall 30, a rear wall 31 and sidewalls 32, forming a cavity 34 for housing a typical load cell (not shown) and one or more mounting points 36 for securing the load cell to the mount 24. In the particular arrangement (see Fig. 4), the load cell 40 is shown as a metal block having one end (dead end) 41 fixed to the mount 24 whilst the other end (live end) 42 is free to move vertically under the application of a load. The degree of deformation is an indication of the load applied to the load cell 40. A hole 43 is machined in the block to define flexure beams 49 and hinges 47 whereby the block is elastically deformable in shear by downward loads applied to the live end. Suitable strain gauges (not shown) are used to measure deformation of the flexure beams in a manner well known as such. Common types of strain gauges known in the art are a Wheatstone bridge resistance type or a piezoelectric type. Other types of load cells and transducers known to a person skilled in the art are applicable in the present invention.

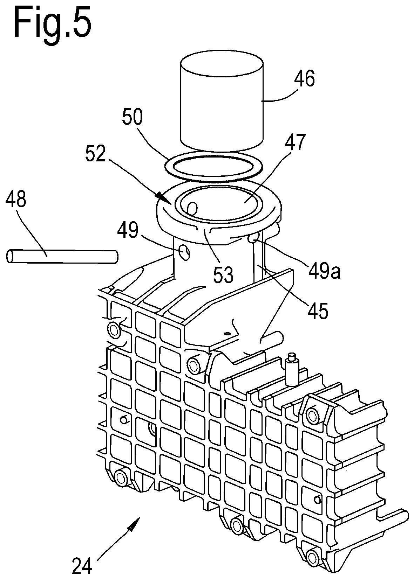

The body portion 38 of the mount 24 is formed with a suspension point in the form of a neck portion 45 for suspending the mount 24 from a suitable overhead support, e.g. a ceiling mounted support pole. The neck portion 45 can be detachably mounted to the overhead support 46 or equally it can permanently fixed to the support, e.g. by welding. In the particular embodiment, the neck portion comprises a tubular socket 47 for receiving a complementary support pole lower end 46 (see Fig. 5). The pole is detachably fixed to the neck portion by a cotter pin 48 inserted into a hole 49. A further set of holes 49a for a further cotter pin (not shown) may also be provided. However, other means for suitably securing the mount to any bespoke overhead pole or beam arrangement known in the art and which facilitates ease of attachment/detachment of the mount from the support is permissible. The neck portion 45 is made sufficiently substantial to bear the full weight of any loads applied to the load cell including any over-loads in an event of accidental overloading of the weighing scale. For example, in the supermarket environment, the mount must be able to withstand loads beyond that stated for the particular load cell, e.g. when subjected to extreme loads in an event of children swinging from the hanging rod of the weighing scale, without damaging the load cell, but most importantly without causing the mount to inadvertely release from its overhead support. Failure of the mount suspension point will cause the weighing scale to fall, not only damaging the scale, but also risking injury to anyone in its path. To provide a further safety measure in an event that the mount is accidentally released from its support, the mount 24 can have an anchor point for a chain or tether to link the mount to the support. This can be provided on the body 38 of the mount 24 or the neck portion 45. Thus, in an event that the hanging point 45 of the mount 24 is accidentally released from the support, the weighing scale is prevented from falling.

In certain environments, water e.g. from condensation, leakage or cleaning processes, tends to drip down the support or pole 46 used to suspend the weighing scale. This water could potentially enter the weighing scale casing, causing damage to its internal components. The joint between the support pole and the socket 47 of the neck portion 45 can thus be made water tight by the provision of seal, e.g. an O - ring 50 (see Fig. 5). However, this would not remove the possibility of water then flowing on the outside casing of the weighing scale thereby still risking the possibility of the water finding its way into the interior of the weighing scale, e.g. between panels or front and rear shells of the outer casing. A further feature that can be incorporated with the neck portion 45 is the provision of a gutter 52 at the head of the neck portion 45. Thus, water dripping down the support pole 46 onto the weighing scale is captured in the gutter 52 and prevented from flowing further down the outer casing of the weighing scale. One of the walls of the gutter can be provided with a break 53 to direct the water safely away from the weighing scale. Preferably, water is directed towards the back of the weighing scale where there is a watertight unitary casing shell (not shown), presenting little risk of water entering the interior of the body of the weighing scale or accumulating in the weighing pan and obscuring the accuracy of the weight reading.

The mount 24 of the present invention can readily provide sufficient structural strength, stiffness and integrity when subjected to any excessive loads, sudden shocks or vibration. In the particular embodiment, such advantages can be offered by integrally forming the mount 24 as a single metal casting. Various known casting techniques such as die casting or sand casting can be used to produce the mount. This not only provides an efficient mechanism for fabricating the mount but the walls of the mount can be made more substantial and/or fabricated from high strength/stiff materials that would otherwise be more difficult to fabricate any other way. Typically, the mount 24 can be die cast from light metals, e.g. aluminium alloys, magnesium alloys or even sophisticated metals such as titanium. Moreover, casting allows various design shapes to be incorporated in the mount efficiently. This, for example, facilitates various designs and shapes of the hanging point 45 arrangement to be made for assembly onto bespoke overhead hanging kits. In addition, the walls of the mount 24 can be fabricated with various patterns of protrusions and relieved areas, or internal structural elements 54, 56 maximising the strength and/or stiffness of the mount (see Figs. 2, 3 and 5). In the particular embodiment, the patterns and structural elements are formed as ribs 54, 56 on the exterior and interior walls of the mount 24. The increased surface area provided by the ribs 54, 56 can also act as fins to dissipate heat, i.e. heat sink. This is particularly advantageous where heat generated from electronic components, e.g. transformers, triacs, thyristors, microprocessors and the like, would need to be dissipated.

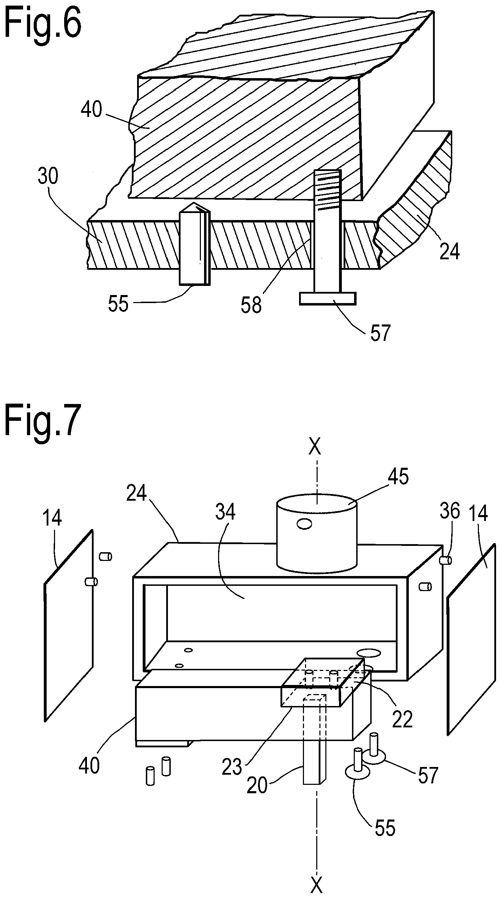

The mount preferably has a hollow, box-like interior, within which the load cell can be at least partially housed. To protect against excessive downward movement of the load cell when subjected to a sudden downward force or sudden shock, e.g. by dropping a load into the pan of the weighing scale, a download protection stop 55 is provided by a grub screw 55 (Fig. 6), with a predetermined length of the screw protruding through the bottom wall 30 of the mount. When subjected to excessive downward loading, the bottom surface of the load cell 40 comes into contact with this screw 55 thus limiting any further downward travel of the load cell 40 and relieving the overload. Conversely, a complementary upload protection screw 57 is provided through one of the walls of the mount to protect the load cell 40 against excessive upload movement and forces. For example, a large head 'patch' screw 57 can be assembled to the load cell 40, passing freely through a slot 58 in the mount 24. The head of the patch screw is set at a predetermined spacing from the reaction surface on the mount and limits the upward movement of the load cell when subjected to shock or excessive loading in the upward direction.

Due to its stability and structural integrity, the mount 24 can also be fabricated with a number of mounting points 36 for the auxiliary components such as circuit boards 14 and peripheral units such as a printer, display unit, etc (see Fig. 7). This allows the weighing scale to be assembled more compactly than existing weighing scales known in the art in which the casing accommodating the components is usually compartmentalised and must be fabricated from loadbearing chassis components, brackets, frames, beams, pillars and the like, contributing to the bulkiness, weight, expense and complexity of assembly of the weighing scale. Figure 7 shows a schematic, exploded layout of an example of a weighing scale according to an embodiment of the present invention, more particularly the arrangement of the mount 24 with respect to the load cell 40 and other auxiliary components 14. In the particular embodiment, the auxiliary and peripheral units 14 are shown mounted around the mount 24 so that they are directly or indirectly supported by or "hung" off the mount 24. In addition, further mounting points can be provided for supporting the external panels or shells (not shown) making up the outer casing of the hanging scale, and for mounting cable ties, racks, tidies and the like, so that all the necessary wiring etc. can be neatly contained within the casing. One can envisage the mount of the present invention acting like a "hanger" for supporting all of the components making up a typical weighing scale. However, not all of the auxiliary components or peripheral units 14 need to be supported by the mount 24 alone and can be supported by some other external support mechanism, such as a subframe or bracketry, and/or by the external casing. The ability to hang or support some or all of the auxiliary components from or on the mount increases the flexibility of the design of the outer panels since there is no need to take into consideration any requirement to support the weighing scale and any applied loads. Thus, the outer panels can be fabricated to a wider variety of shapes and designs, using materials selected more for their aesthetic appeal and with less regard to their structural strength. For example, the outer panels can be fabricated using known injection moulding techniques, which to date have not been commonly used in the fabrication of loadbearing hanging scale housings.

In use, weight loads are applied to the load cell by means of a hanging rod 20 or other weighpan suspension member mounted to the live end 42 of the load cell. In order to weigh accurately, the weight must be imparted to the load cell with only a vertical force component, and with no horizontal force component. Thus a centrally located weighpan support rod ideally should naturally hang substantially vertically. To ensure such vertical hanging whilst also minimising any moments imposed on the mount suspension point (neck portion 45), the axis of the weighpan support member or hanging rod should be aligned with the mount suspension point 45 (axis X-X in figure 7). Ideally, but not essentially, the live end 42 of the load cell 40 could also be arranged coaxially with both the mount suspension point 45 and the hanging rod 20, to minimise any moments about the load cell live end. In the illustrated embodiment, the load cell is recessed in the cavity 34 of the mount 24, such that its live end 42 is offset from the load axis (see Fig. 7). As a result, a load bearing plate 22 is provided that has a distal end 23 coaxial with the load axis X-X defined by the hanging point 45 and the hanging rod 20 axis, for transferring the load applied to the hanging rod to the live end of the load cell. Optionally, the load bearing plate 22 can be integrally formed with the load cell 40, e.g. as a protrusion or cantilevered projection, such that when the load cell is housed in the cavity 34 of the mount 24, the end of the protrusion to which the weighpan support rod 20 is mounted, is coaxial with the load axis X-X. Other arrangements for mounting the hanging rod 20 to the load cell 40 are permissible. In another arrangement, as mentioned above, the load cell can be positioned such that its live end 42 is coaxial with the load axis. This removes the need for a load bearing plate 22 since the hanging rod 20 can be simply mounted directly to the load cell 40. For example, the hanging rod can be mounted underneath the body of the load cell (e.g. having a threaded upper end received in a threaded bush or threaded hole extending upwardly into the live end; or having an upper end passing through a vertical bore through the live end and secured by a suspension nut) so that a downward pulling force applied to the live end 42 of the load cell causes a deformation under weight loads similar to that described above. The load cell may also be supported from the top wall 28 of the cavity 34, rather than being supported from the bottom wall as illustrated.

To provide further protection by preventing the weighpan suspension member from swinging and thus preventing it from imparting a horizontal force component and excessive bending to the load cell or its connection to the weighpan suspension member, which could damage these components, a centraliser 60 is provided. In the particular arrangement, the centraliser 60 is in form of an adjustable centring plate 64 with a clearance hole 66 for receiving the hanging rod 20. The centring plate 64 is located in grooves or rails 68 formed in the outer casing panels 62. This allows the plate 68 to be adjusted relative to the axis X-X of the hanging rod so that its hole 66 can be made concentric with this, so as to present the hanging rod with a reaction surface limiting any adverse movement of the hanging rod in the horizontal direction. Suitable lock screws 69 secure the plate 64 in its adjusted position. It may also be desirable to reduce the length of the hanging rod 20 and thereby reduce any turning moment applied to the load cell and hanging rod upper mounting. The reduction in the length of the hanging rod can be compensated for by increasing the length of the neck portion 45. Since the neck portion 45 is sturdier than the hanging rod 20, this arrangement provides more resistance to any adverse horizontal forces applied to the hanging rod 20. The centring plate 64 (particularly, but not necessarily exclusively, in the case of a shortened hanging rod 20) can be raised and supported by the mount 24 of the present invention rather than by the external panels, e.g. by forming the bottom wall 28 of the mount 24 with grooves or rails 68 for receiving the centring plate 64.

One of the inherent problems encountered with an electrically conductive hanging rod 20 e.g. made from metal, is that it acts as an aerial for electromagnetically or RF induced currents, causing interference to the measured weight readings. To overcome such effects the hanging rod can be electrically isolated from the load cell by providing insulating spacers and bushes or sleeves between the mount of the hanging rod and the load cell. Thus, any induced currents in the hanging rod are prevented from interfering with the measurements.

## Claims

1. A mount (24) for a weighing scale, comprising a suspension point (45) from which the mount (24) is hung in use, a mounting point (36) for a load cell (40) and means for supporting an outer casing within which the mount (24) is housed, the mount (24) comprises a cavity (34) having a top wall (28), a bottom wall (30), a rear wall (31) and sidewalls (32) for housing the load cell (40)
**characterised in that**;
the mount formed as a single body having a body portion (38) and the suspension point (45); the suspension point (45) comprising a neck portion (45) configured to bear the full weight of the load cell and any loads applied to the load cell, wherein the neck portion (45) comprises a tubular socket (47) for receiving a complementary support pole.

2. A mount (24) as defined in claim 1, comprising means for supporting further auxiliary components (14) externally of the mount (24).

3. A mount (24) as claimed in any one of the preceding claims, wherein the mount (24) has a stiffening or strengthening element (54, 56) formed thereon.

4. A mount (24) as claimed in any preceding claim, wherein the neck portion (45) comprises a tubular socket (47) for receiving a complementary support pole (46) of a hanging kit (46, 48).

5. A mount (24) as claimed in claim 4, wherein the neck portion (45) has a head comprising a gutter (52) for capturing fluids.

6. A mount (24) as claimed in claim 5, wherein the gutter (52) has an outer wall with a break region (53) for the release of fluids.

7. A weighing scale comprising a load cell (40) and a mount (24) as defined in any of the preceding claims.

8. A weighing scale as claimed in claim 7, comprising a weighpan suspension member (20) supported by the load cell (40).

9. A weighing scale as claimed in claim 8, wherein the mount suspension point (45), the weighpan suspension member (20) and the load cell (40) are aligned along a load axis.

10. A weighing scale as claimed in anyone of claims 7 to 9, further comprising an adjustable centraliser (60, 64) having a clearance hole (66) for receiving the weighpan suspension member.

11. A weighing scale as claimed in anyone of claims 8 to 10, wherein the weighpan suspension member (20) is mounted to the load cell by means of a cantilevered mounting.

12. A weighing scale as claimed in any one of claims 7 to 11, wherein the mount (24) comprises of a stop (55) for relieving excessive loads on the load cell.

13. A weighing scale as claimed in claim 12, wherein the stop (55) is adjustable.

## Patentansprüche

1. Halterung (24) für eine Waage, die einen Aufhängepunkt (45), an dem die Halterung (24) im Gebrauch angehängt wird, einen Befestigungspunkt (36) für eine Wägezelle (40) und Mittel zum Halten eines Außengehäuses, in dem die Halterung (24) untergebracht ist, umfasst, wobei die Halterung (24) einen Hohlraum (34) mit einer oberen Wand (28), einer Bodenwand (30), einer Rückwand (31) und Seitenwänden (32) zum Unterbringen der Wägezelle (40) umfasst,
**dadurch gekennzeichnet, dass**:
die als ungeteilter Körper ausgebildete Halterung einen Körperabschnitt (38) und den Aufhängepunkt (45) aufweist; wobei der Aufhängepunkt (45) einen Halsabschnitt (45) umfasst, der so ausgelegt ist, dass er das volle Gewicht der Wägezelle und sämtliche auf die Wägezelle aufgebrachte Lasten trägt, wobei der Halsabschnitt (45) eine röhrenförmige Buchse (47) zum Aufnehmen einer darauf abgestimmten Trägerstange umfasst.

2. Halterung (24) nach Anspruch 1, die Mittel zum Halten weiterer Hilfskomponenten (14) außerhalb der Halterung (24) umfasst.

3. Halterung (24) nach einem der vorhergehenden Ansprüche, wobei die Halterung (24) ein daran ausgebildetes Versteifungs- oder Verstärkungselement (54, 56) aufweist.

4. Halterung (24) nach einem der vorhergehenden Ansprüche, wobei der Halsabschnitt (45) eine röhrenförmige Buchse (47) zum Aufnehmen einer darauf abgestimmten Trägerstange (46) eines Aufhängebausatzes (46, 48) umfasst.

5. Halterung (24) nach Anspruch 4, wobei der Halsabschnitt (45) einen Kopf umfassend einen Ablauf (52) zum Auffangen von Flüssigkeiten aufweist.

6. Halterung (24) nach Anspruch 5, wobei der Ablauf (52) eine Außenwand mit einem Unterbrechungsbereich (53) zum Abgeben von Flüssigkeiten aufweist.

7. Waage, die eine Wägezelle (40) und eine Halterung (24) nach einem der vorhergehenden Ansprüche umfasst.

8. Waage nach Anspruch 7, die ein Waagschalen-Aufhängeelement (20) umfasst, das von der Wägezelle (40) gehalten wird.

9. Waage nach Anspruch 8, wobei der Aufhängepunkt (45) der Halterung, das Waagschalen-Aufhängeelement (20) und die Wägezelle (40) entlang einer Lastachse ausgerichtet sind.

10. Waage nach einem der Ansprüche 7 bis 9, die ferner ein einstellbares Zentrierelement (60, 64) mit einer Durchgangsbohrung (66) zum Aufnehmen des Waagschalen-Aufhängeelements umfasst.

11. Waage nach einem der Ansprüche 8 bis 10, wobei das Waagschalen-Aufhängeelement (20) über eine einseitige Befestigung an der Wägezelle befestigt ist.

12. Waage nach einem der Ansprüche 7 bis 11, wobei die Halterung (24) ein Begrenzungselement (55) zur Entlastung der Wägezelle bei übermäßiger Belastung derselben umfasst.

13. Waage nach Anspruch 12, wobei das Begrenzungsglied (55) einstellbar ist.

## Revendications

1. Monture (24) pour une balance de pesage, comprenant un point de suspension (45) à partir duquel la monture (24) est suspendue lors de l'utilisation, un point de montage (36) pour une cellule de charge (40) et des moyens pour supporter une enceinte extérieure à l'intérieur de laquelle la monture (24) est logée, la monture (24) comprenant une cavité (34) présentant une paroi supérieure (28), une paroi inférieure (30), une paroi arrière (31) et des parois latérales (32) pour loger la cellule de charge (40),
**caractérisée en ce que** la monture est formée comme un seul corps comprenant une partie de corps (38) et le point de suspension (45); le point de suspension (45) comprenant une partie de goulot (45) configurée de manière à porter la totalité du poids de la cellule de charge et de toutes charges appliquées à la cellule de charge, dans laquelle la partie de goulot (45) comprend une douille tubulaire (47) destinée à recevoir un poteau de support complémentaire.

2. Monture (24) selon la revendication 1, comprenant des moyens pour supporter des composants auxiliaires supplémentaires (14) à l'extérieur de la monture (24).

3. Monture (24) selon l'une quelconque des revendications précédentes, dans laquelle la monture (24) comprend un élément de raidissement ou de renforcement (54, 56) formé sur celle-ci.

4. Monture (24) selon l'une quelconque des revendications précédentes, dans laquelle la partie de goulot (45) comprend une douille tubulaire (47) destinée à recevoir un poteau de support complémentaire (46) d'un kit de suspension (46, 48).

5. Monture (24) selon la revendication 4, dans laquelle la partie de goulot (45) présente une tête comportant une gouttière (52) pour collecter des fluides.

6. Monture (24) selon la revendication 5, dans laquelle la gouttière (52) comprend une paroi extérieure qui présente une région de cassure (53) pour la libération de fluides.

7. Balance de pesage comprenant une cellule de charge (40) et une monture (24) selon l'une quelconque des revendications précédentes.

8. Balance de pesage selon la revendication 7, comprenant un élément de suspension de plateau de balance (20) supporté par la cellule de charge (40).

9. Balance de pesage selon la revendication 8, dans laquelle le point de suspension de monture (45), l'élément de suspension de plateau de balance (20) et la cellule de charge (40) sont alignés le long d'un axe de charge.

10. Balance de pesage selon l'une quelconque des revendications 7 à 9, comprenant en outre un centralisateur réglable (60, 64) présentant un trou de dégagement (66) destiné à recevoir l'élément de suspension de plateau de balance.

11. Balance de pesage selon l'une quelconque des revendications 8 à 10, dans laquelle l'élément de suspension de plateau de balance (20) est monté sur la cellule de charge au moyen d'un montage en porte-à-faux.

12. Balance de pesage selon l'une quelconque des revendications 7 à 11, dans laquelle la monture (24) comprend un arrêt (55) pour relâcher des charges excessives sur la cellule de charge.

13. Balance de pesage selon la revendication 12, dans laquelle l'arrêt (55) est réglable.
